# FASCICULE DE BREVET EUROPEEN

(11) **EP 3 593 005 B1**
(45) Date de publication et mention de la délivrance du brevet: **20.01.2021**
(21) Numéro de dépôt: 18707105.5
(22) Date de dépôt: 12.02.2018
(51) Int. Cl.: F16D 48/08

(54) **PROCÉDÉ DE PILOTAGE D'UN EMBRAYAGE RELIE A UNE MACHINE ÉLECTRIQUE LORS D'UN DÉMARRAGE D'UN MOTEUR THERMIQUE**
VERFAHREN ZUR STEUERUNG EINER AN EINE ELEKTRISCHE MASCHINE BEIM START EINES VERBRENNUNGSMOTORS ANGESCHLOSSENEN KUPPLUNG
METHOD FOR CONTROLLING A CLUTCH CONNECTED TO AN ELECTRIC MACHINE WHEN A COMBUSTION ENGINE STARTS

(30) Priorité: 06.03.2017 FR 1751783
(43) Date de publication de la demande: 15.01.2020
(73) Titulaire: PSA Automobiles SA, 78300 Poissy (FR)
(72) Inventeur: MARCHYLLIE, Alexis, 33160 St Medard en Jalles (FR); BOUCRAUT, Sebastien, 94130 Nogent sur Marne (FR); HABBANI, Ridouane, 92600 Asnieres sur Seine (FR); NOIRET, Christian, 92150 Suresnes (FR)
(86) Numéro de dépôt international: PCT/FR2018/050330
(87) Numéro de publication internationale: WO 2018/162812

(56) Documents cités:
- WO-A1-2014/087095
- WO-A2-2015/014614
- DE-A1- 10 346 885
- FR-A1- 2 928 600

## Description

La présente invention concerne un procédé de pilotage d'un embrayage lors d'un démarrage d'un moteur thermique, l'embrayage accouplant une machine électrique à haute performance au moteur thermique pour effectuer son démarrage. Voir le document WO 2015/014614.

Par machine haute performance, il est entendu une machine électrique capable de fournir au moins 30.000 Watt et 100 Newton-mètre de couple, donc plus puissante qu'un démarreur ou un alterno-démarreur couramment utilisé.

L'invention se place plus particulièrement dans le contexte d'un véhicule automobile hybride équipé d'un moteur thermique et d'une machine électrique de traction, la machine électrique de traction, lors du démarrage du moteur thermique, étant couplée au moteur thermique par l'embrayage, la machine électrique faisant alors office d'alternateur ou d'alterno-démarreur.

Ceci n'est cependant pas limitatif et la présente invention s'applique à tout ensemble d'un moteur thermique, d'un embrayage, d'une machine électrique haute performance et d'une unité de contrôle en charge du fonctionnement de ces trois éléments précédemment cités. Il sera cependant pris l'exemple d'un véhicule hybride dans ce qui suit pour illustrer l'état de la technique et décrire la présente invention mais ceci n'est pas limitatif.

Une chaîne de traction d'un véhicule hybride peut comprendre une machine électrique de traction capable de fournir du couple aux roues motrices, d'une part, pour assurer la propulsion du véhicule, et au moteur thermique d'autre part, notamment pour en assurer le démarrage. Un tel emploi d'une machine électrique de traction permet d'obtenir de hautes performances de démarrage du moteur thermique, en terme de temps de démarrage mais également de vibrations et d'acoustique.

Des problèmes de tenue de composants du moteur thermique peuvent être cependant engendrés par une mise en rotation trop rapide du moteur thermique, notamment en termes de lubrification des composants en rotation. Des gradients de régime moteur trop importants lors du démarrage moteur peuvent entraîner des risques d'usure prématurée du vilebrequin ou d'altération des palettes de pompes à huile pouvant entraîner une dégradation sévère du moteur thermique. Les risques concernent notamment la rupture de l'assemblage entre arbre et rotor sur la pompe à huile, la tenue de l'assemblage serré en nez de vilebrequin des différents pignons entre eux et le risque de mauvaise lubrification des coussinets de lignes d'arbres.

Une dynamique de montée en régime du moteur thermique lors du démarrage par une machine électrique haute performance est donc conditionnée directement par le couple transmis par l'embrayage vers le moteur thermique. L'embrayage est piloté en couple maximal transmissible et la maîtrise du gradient de régime moteur dépend donc de la précision de ce pilotage. Une erreur de 15% sur le couple maximal transmissible par l'embrayage peut conduire à une incertitude supérieure à 2.000 tr/min.s soit 33,33 tours par seconde au carré sur le gradient de régime. Ceci est inacceptable au vu de l'objectif de niveau de gradient de régime situé aux alentours de 2.500 tr/min.s soit 41,66 tours par seconde au carré.

La maîtrise du gradient de régime moteur est donc primordiale lors du démarrage d'un moteur thermique. Cette maîtrise dépend à l'ordre un de la précision de pilotage de l'embrayage de couplage entre la machine électrique et le moteur thermique. Or les procédés de fabrication, d'une part, et les conditions d'utilisation, d'autre part, engendrent une précision et une reproductibilité insuffisantes de ce pilotage pour garantir la durabilité du moteur thermique.

Le document EP-A-2 300 297 décrit un procédé pour faire fonctionner un groupe motopropulseur d'un véhicule automobile, le groupe comportant un entraînement hybride avec un moteur thermique et un moteur électrique. Un embrayage est placé entre le moteur thermique et le moteur électrique, un engrenage étant disposé entre l'entraînement hybride et une partie entraînée ainsi que, de préférence, un élément de démarrage situé à l'intérieur ou à l'extérieur de l'engrenage, par exemple une boîte de vitesses.

Lors du démarrage externe du moteur thermique au moyen du moteur électrique, l'embrayage, couplé entre le moteur thermique et le moteur électrique, est fermé par glissement de manière à transmettre un couple d'embrayage constant. Un gradient réel du régime du moteur à combustion, s'ajustant réellement lors du démarrage externe, est comparé à un gradient théorique du régime du moteur thermique et, ensuite, si le gradient réel est supérieur au gradient théorique, une fermeture se produit sur un moteur thermique démarré qui fournit un couple de manière active.

S'il est fait état, dans ce document, de l'observation du gradient de régime du moteur thermique dans le but de déterminer l'état démarré de ce moteur thermique, il n'est ni décrit ni suggéré comment maîtriser ce gradient de régime moteur thermique durant le démarrage du moteur thermique. Le but du procédé divulgué dans ce document n'est donc que de déterminer l'état démarré du moteur thermique.

Au contraire, le but de la présente invention est de piloter l'embrayage reliant une machine électrique à haute performance à un moteur thermique lors d'une phase de démarrage afin que la phase de démarrage se fasse avec une montée en régime moteur du moteur thermique maîtrisé tout en conservant des performances de démarrage très satisfaisantes.

Pour atteindre cet objectif, il est prévu selon l'invention un procédé de pilotage d'un embrayage lors d'un démarrage d'un moteur thermique, l'embrayage accouplant une machine électrique à haute performance, fournissant une puissance d'au moins 30.000 Watt et un couple de 100 Newton-mètre, au moteur thermique lors d'une phase de démarrage du moteur thermique, le procédé présentant une étape de mise en rotation de la machine électrique avec l'embrayage en position neutre pour ne transmettre aucun couple au moteur puis une étape de fermeture de l'embrayage entraînant une transmission de couple au moteur thermique et donc sa mise en rotation, l'embrayage étant piloté selon un couple maximal de consigne transmissible au moteur, caractérisé en ce que le couple maximal de consigne transmissible au moteur est prédéterminé selon une estimation des pertes par frottement du moteur thermique afin d'obtenir un gradient de régime moteur donné et en ce qu'il est effectué une étape de mesure ou d'estimation d'une accélération du régime du moteur lors de la transmission du couple de consigne durant la phase de démarrage et quand cette accélération mesurée ou estimée montre une différence de plus de 6,66 tours par seconde au carré avec le gradient de régime moteur donné, il est effectué au moins une étape de correction du couple maximal de consigne en un couple maximal de consigne corrigé en fonction de l'accélération mesurée ou détectée afin que l'accélération réellement obtenue lors de la phase de démarrage tende vers le gradient de régime moteur donné.

L'effet technique est d'obtenir une optimisation des performances temporelles, vibratoires et acoustiques d'un démarrage du moteur thermique, tout en maîtrisant le gradient de régime du moteur thermique lors du démarrage du moteur thermique. Le procédé selon la présente invention est basé sur la maîtrise du couple transmissible maximal par l'embrayage de couplage positionné entre la machine électrique haute performance et le moteur thermique.

La présente invention présente donc une stratégie de pilotage rapproché du couple maximal transmissible par l'embrayage, consistant à observer l'accélération du régime du moteur thermique en direct au cours du démarrage, et à adapter en conséquence le pilotage de l'embrayage, pour garantir le respect des critères de gradient de régime du moteur thermique.

Avantageusement, quand l'accélération mesurée ou estimée est inférieure au gradient de régime moteur donné, le couple maximal de consigne est considéré comme sous-évalué et est augmenté d'un pourcentage fonction de la différence entre l'accélération mesurée ou détectée et le gradient de régime moteur donné pour donner le couple maximal de consigne corrigé et quand l'accélération mesurée ou estimée est supérieure au gradient de régime moteur donné, le couple maximal de consigne est considéré comme surévalué et est diminué d'un pourcentage fonction de la différence entre l'accélération mesurée ou détectée et le gradient de régime moteur donné pour donner le couple maximal de consigne corrigé.

Avantageusement, il est défini un régime cible du moteur thermique représentatif de son démarrage effectif, le couple maximal de consigne corrigé étant appliqué jusqu'à atteinte du régime cible du moteur thermique.

Dans un premier mode préférentiel de réalisation de l'invention, il est effectué une unique étape de correction du couple maximal de consigne lors de la phase de démarrage, l'étape de mesure ou d'estimation de l'accélération du moteur se faisant après une première durée prise à partir d'un début de démarrage commençant à la fermeture de l'embrayage, cette première durée étant inférieure à une durée totale estimée prise à partir de l'accouplement de l'embrayage avec le moteur thermique. Ceci est le mode de réalisation de base de la présente invention, une unique correction pouvant être suffisante.

Avantageusement, la première durée prise à partir d'un début de démarrage commençant à la fermeture de l'embrayage est de 5 à 20 fois inférieure à la durée totale estimée prise à partir de l'accouplement de l'embrayage avec le moteur thermique.

Dans un deuxième mode préférentiel de réalisation de l'invention, il est effectué en temps réel plusieurs étapes successives de correction du couple maximal de consigne lors de la phase de démarrage. Ceci permet un suivi optimal du couple maximal de consigne.

Avantageusement, l'estimation des pertes par frottement du moteur thermique se fait en fonction d'au moins un des paramètres suivants pris unitairement ou en combinaison : une température du moteur, un type de moteur et un vieillissement du moteur. Plus la température est basse et plus les frottements sont importants. Les frottements varient selon le vieillissement du moteur et selon le type de moteur.

L'invention concerne aussi un ensemble d'un moteur thermique, d'une unité de contrôle moteur associée à des moyens de mesure ou d'estimation d'une accélération du régime du moteur thermique, d'une machine électrique haute performance, fournissant une puissance d'au moins 30.000 Watt et un couple de 100 Newton-mètre et d'un embrayage permettant le couplage entre la machine électrique à haute performance et le moteur thermique, la machine électrique haute performance assurant le démarrage du moteur thermique et l'unité de contrôle moteur présentant des moyens de pilotage de l'embrayage lors du démarrage du moteur thermique, caractérisé en ce que l'unité de contrôle moteur présente des moyens de détermination préalable pour l'embrayage d'un couple maximal de consigne transmissible au moteur, des moyens de comparaison entre cette accélération mesurée ou estimée et un gradient de régime moteur réellement obtenu et des moyens de correction du couple maximal de consigne pour la mise en oeuvre d'un tel procédé de pilotage.

La présente invention ne peut pas fonctionner avec des démarreurs tels qu'ils existent aujourd'hui. En effet, ces démarreurs entraînent le moteur à un régime faible, par exemple de 200 à 400 tr/min et le moteur thermique monte en régime de par ses propres combustions. La présente invention nécessite l'utilisation d'une machine électrique haute performance, comme il a été défini ci-dessus pour le démarrage du moteur thermique. il est ainsi effectué une modulation du couple d'une machine électrique haute performance lors d'un démarrage moteur thermique.

L'ensemble ainsi revendiqué n'est pas forcément une chaîne de traction mais cet ensemble peut aussi être une chaîne de traction non hybride équipée d'un système de démarrage renforcé du type alterno-démarreur haute performance et non alterno-démarreur classique. L'emploi d'un tel alterno-démarreur dans une chaîne de traction est connu sous la dénomination de micro-hybridation. L'ensemble peut aussi être une chaîne de traction sur laquelle un convertisseur de couple a été remplacé par une machine électrique haute performance.

La solution proposée par la présente invention est une solution essentiellement logicielle de pilotage de l'embrayage par une unité de contrôle moteur et ne nécessite pas l'ajout d'éléments mécaniques supplémentaires d'où un impact limité sur le coût de mise en œuvre de l'invention.

Avantageusement, la machine électrique est une machine électrique de traction liée mécaniquement à une boîte de vitesses pour former une boîte de vitesses électrifiée.

L'invention concerne enfin un véhicule automobile, caractérisé en ce qu'il comprend un tel ensemble.

D'autres caractéristiques, buts et avantages de la présente invention apparaîtront à la lecture de la description détaillée qui va suivre et au regard des dessins annexés donnés à titre d'exemples non limitatifs et sur lesquels :

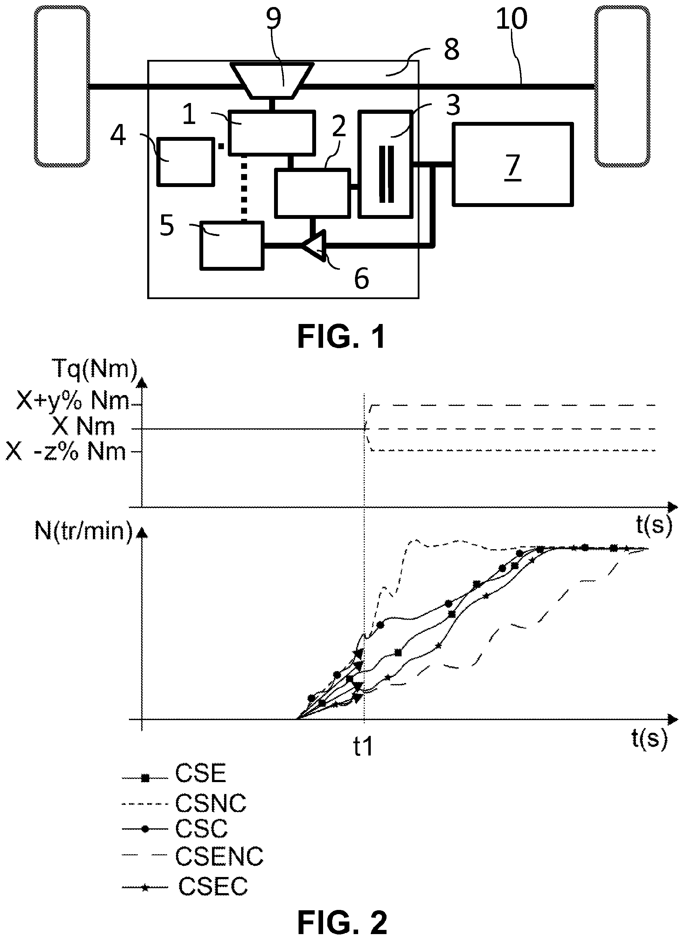

- la figure 1 est une représentation schématique d'une chaîne de traction hybride avec un moteur thermique et une machine électrique de traction, la machine électrique de traction étant couplée avec le moteur thermique lors du démarrage du moteur thermique par un embrayage dont un couple maximal de consigne transmissible au moteur est piloté conformément à un procédé de pilotage selon la présente invention,
- la figure 2 illustre deux séries de courbes en fonction d'un temps t en secondes, la première série de courbes montrant trois courbes dont une courbe de couple maximal de consigne et deux courbes de couple maximal de consigne corrigé en étant respectivement augmenté et diminué, la deuxième série montrant cinq courbes de régime respectivement sans erreur, surévalué sans correction, sous-évalué sans correction, surévalué et corrigé et sous-évalué et corrigé.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une figure spécifique, cette figure est à prendre en combinaison avec l'autre figure pour la reconnaissance des références numériques désignées.

La figure 1 montre une chaîne de traction 8 hybride reliée à un arbre 10 de roues motrices équipé d'un différentiel 9. La chaîne de traction 8 est équipée d'une boîte de vitesses électrifiée 1, 2 comportant une boîte de vitesses 1 effective et une machine électrique 2 de traction liée mécaniquement à cette boîte de vitesses 1. La chaîne de traction 8 comprend aussi un embrayage 3 permettant le couplage entre la machine électrique 2 de traction et un moteur 7 thermique.

Cette chaîne de traction illustre un ensemble 8 pouvant être dit de traction qui peut mettre en œuvre le procédé de pilotage selon la présente invention mais n'est qu'un mode de réalisation parmi d'autres d'un tel ensemble 8, la machine électrique 2 pouvant ne pas être une machine électrique 2 de traction mais seulement une machine électrique 2 haute performance. Ce qui est entendu par haute performance a été précédemment détaillé. Cet ensemble 8 n'équipe pas forcément un véhicule automobile hybride.

De manière plus générale, dans le cadre de la présente invention, un tel ensemble 8, fréquemment de traction, comprend au moins un moteur 7 thermique, une unité de contrôle moteur, non montrée à la figure 1, associée à des moyens de mesure ou d'estimation d'une accélération du régime du moteur 7 thermique, une machine électrique 2 haute performance qui n'est pas forcément une machine de traction.

L'ensemble 8 comprend aussi un embrayage 3 permettant le couplage entre la machine électrique 2 à haute performance et le moteur 7 thermique et l'unité de contrôle moteur, non montrée aux figures, présente des moyens de pilotage de l'embrayage 3 lors du démarrage du moteur 7 thermique. Le terme embrayage 3 qualifie tout organe pilotable de transmission de couple.

En se référant à nouveau pour illustration de l'ensemble 8 au mode de réalisation d'un tel ensemble 8 montré à la figure 1, un tel ensemble 8 permet le démarrage du moteur 7 thermique par la machine électrique 2 haute performance, à la figure 1 une machine électrique 2 de traction, avec des performances temporelles, vibratoires et acoustiques nettement améliorées par rapport aux systèmes de démarrage du moteur 7 thermique classique, de type démarreur ou alterno-démarreur classique.

Le pilotage de l'embrayage 3 peut nécessiter le maintien d'une certaine pression hydraulique dans le système relié à la machine électrique 2 de traction, cette pression pouvant être assurée notamment par la rotation de la machine électrique 2 haute performance entraînant une pompe mécanique 5. Dans le mode de réalisation de l'ensemble 8 montré à la figure 1, une pompe électrique 4 peut être reliée à la boîte de vitesses 1 puis à la pompe mécanique 5 par un flux hydraulique dessiné en pointillés à la figure 1.

Une roue libre 6 relie la machine électrique 2 haute performance au moteur 7 thermique et à la pompe mécanique 5. Les liens mécaniques entre éléments sont illustrés en traits pleins.

Dans le procédé de pilotage selon la présente invention, lors d'une phase de démarrage du moteur 7 thermique, le procédé présente une étape de mise en rotation de la machine électrique 2 avec l'embrayage 3 en position neutre pour ne transmettre aucun couple au moteur 7.

Ensuite, le procédé comprend une étape de fermeture de l'embrayage 3 entraînant une transmission de couple au moteur 7 thermique et donc sa mise en rotation, l'embrayage 3 étant piloté selon un couple maximal de consigne X transmissible au moteur 7, la référence X étant montrée à la figure 2.

Selon l'invention, le couple maximal de consigne X transmissible au moteur 7 est prédéterminé selon une estimation des pertes par frottement du moteur 7 thermique afin d'obtenir un gradient de régime moteur donné. Un tel couple maximal de consigne X transmissible par l'embrayage 3 au moteur 7 permet d'obtenir un gradient de régime moteur thermique maîtrisé tout en conservant des performances de démarrage améliorées.

De plus, il est effectué une étape de mesure ou d'estimation d'une accélération du régime du moteur 7 lors de la transmission du couple de consigne durant la phase de démarrage.

En se référant aussi à la figure 2, quand cette accélération mesurée ou estimée montre une différence de plus de 6,66 tours par seconde au carré avec le gradient de régime moteur donné, il est effectué au moins une étape de correction du couple maximal de consigne X en un couple maximal de consigne corrigé X+y%; X-z% en fonction de l'accélération mesurée ou détectée afin que l'accélération réellement obtenue lors de la phase de démarrage tende vers le gradient de régime moteur donné. Une différence de 6,66 tours par seconde au carré correspond à un régime de 400 tours par minute par seconde et donc à un gradient de 400 tours par minute pour une seconde.

La figure 2, tout en se référant à la figure 1 pour les références manquantes à la figure 2, montre dans sa partie inférieure cinq courbes de régime moteur N(tr/mn) exprimé en tours par minute en fonction d'un temps t(s) exprimé en secondes. La courbe de régime CSE avec des carrés est obtenue avec un couple maximal de consigne X transmissible sans erreur, donc qui n'a pas besoin d'être corrigé. La référence X est montrée en partie haute de la figure 2 pour les courbes de couple.

La courbe de régime CNSC supérieur avec des pointillés courts est obtenue avec un couple maximal de consigne X transmissible surévalué et non corrigé tandis que la courbe de régime CSC avec des cercles est obtenue avec un couple maximal de consigne X transmissible surévalué corrigé.

La courbe de régime CSENC en pointillés longs est obtenue avec un couple maximal de consigne X transmissible sous-évalué sans correction tandis que la courbe de régime CSEC avec des étoiles est obtenue avec un couple maximal de consigne X transmissible sous-évalué corrigé. Il est visible que les courbes de régime CSEC et CSC obtenues avec des couples corrigés se rapprochent de la courbe de régime CSE dont le couple maximal de consigne X n'a pas besoin d'être corrigé : les régimes avec des couples maximaux de consigne transmissible corrigés se rapprochent donc du régime à suivre.

Comme montré à la figure 2, quand l'accélération mesurée ou estimée est inférieure au gradient de régime moteur donné, le couple maximal de consigne X peut être considéré comme sous-évalué, ce qui donne la courbe de régime CSENC. Ce couple maximal sous-évalué est alors augmenté d'un pourcentage y% fonction de la différence entre l'accélération mesurée ou détectée et le gradient de régime moteur donné pour donner le couple maximal de consigne corrigé X+y% permettant d'obtenir le régime corrigé CSEC.

Quand l'accélération mesurée ou estimée est supérieure au gradient de régime moteur donné, le couple maximal de consigne X peut être considéré comme surévalué, ce qui donne la courbe de régime CSNC. Ce couple maximal surévalué est alors diminué d'un pourcentage z% fonction de la différence entre l'accélération mesurée ou détectée et le gradient de régime moteur donné pour l'obtention du couple maximal de consigne corrigé X-z% permettant d'obtenir le régime corrigé CSC.

En haut de la figure 2, il est montré des couples maximaux de consigne Tq(N/m) en newton par mètre en fonction d'un temps ts exprimé en secondes. Un couple maximal de consigne X sous-évalué est augmenté de y% tandis qu'un couple maximal de consigne surévalué X est diminué de z%. Un couple maximal de consigne X donnant une accélération mesurée ou estimée montrant une différence de moins de 6,66 tours par seconde au carré avec le gradient de régime moteur donné ne nécessite quant à lui aucune correction.

La présente invention consiste donc à définir une première valeur X de couple transmissible par l'embrayage 3, en fonction des conditions d'utilisation et notamment de la température du moteur 7 thermique, correspondant théoriquement à un gradient de régime moteur thermique donné, issu d'un compromis entre performances de démarrage et durabilité composants.

Une fois cette valeur X définie, l'accélération du moteur 7 thermique est observée durant la première phase du démarrage moteur 7. Cette première phase pourra être par exemple définie par une première durée t1 depuis le début du démarrage, par exemple entre 0,02 à 0,1 seconde, de telle manière que cette première durée t1 soit nettement inférieure à la durée totale d'atteinte du régime cible, par exemple de 5 à 20 fois inférieur.

La première durée t1 peut être prise à partir d'un début de démarrage commençant à la fermeture de l'embrayage 3 et la durée totale estimée peut être prise à partir de l'accouplement de l'embrayage 3 avec le moteur 7 thermique. Ceci est valable quand il y a une unique étape de correction du couple maximal de consigne X lors de la phase de démarrage, comme il va être ultérieurement décrit.

Si l'accélération correspond au gradient de régime attendu avec l'application de la consigne initiale de couple transmissible par l'embrayage 3, on en déduit que l'erreur de couple transmissible est négligeable et la valeur de couple de consigne X est maintenue jusqu'à l'atteinte du régime cible stabilisé dans le cas d'une unique correction mise en oeuvre.

Si l'accélération observée est inférieure au gradient de régime minimal permettant de satisfaire aux exigences de performances de démarrage, le couple transmissible par l'embrayage 3 est considéré comme sous-évalué. Une correction est alors appliquée à la consigne de couple, par exemple sous la forme d'une augmentation de *y*% de la consigne initiale, de manière à optimiser les performances de démarrage. Cette valeur corrigée est alors appliquée jusqu'à l'atteinte du régime cible dans le cas d'une unique correction mise en oeuvre.

Si l'accélération observée est supérieure au critère de gradient de régime défini pour la protection des composants mécaniques, le couple maximal de consigne X transmissible par l'embrayage 3 est considéré comme surévalué. Une correction est alors appliquée à la consigne de couple, par exemple sous la forme d'une diminution de *z*% de la consigne initiale, de manière à prévenir une dégradation du moteur 7 thermique et de ces composants. Cette valeur corrigée est alors appliquée jusqu'à l'atteinte du régime cible dans le cas unique correction mise en oeuvre.

Il peut être défini un régime cible du moteur 7 thermique représentatif de son démarrage effectif, le couple maximal de consigne corrigé X+y%; X-z% étant appliqué jusqu'à atteinte du régime cible du moteur 7 thermique dans le cas d'une unique correction mise en oeuvre.

En effet, selon un premier mode de réalisation de l'invention, il peut être effectué une unique étape de correction du couple maximal de consigne X lors de la phase de démarrage. L'étape de mesure ou d'estimation de l'accélération du moteur 7 peut se faire après la première durée t1 prise à partir d'un début de démarrage commençant à la fermeture de l'embrayage 3. Cette première durée t1 peut être inférieure à la durée totale estimée prise à partir de l'accouplement de l'embrayage 3 avec le moteur 7 thermique.

Selon un deuxième mode de réalisation de l'invention, il peut être effectué en temps réel plusieurs étapes successives de correction du couple maximal de consigne X lors de la phase de démarrage. La correction est alors continue et appliquée sur l'ensemble 8 de la séquence de démarrage.

En ce qui concerne les pertes par frottement du moteur 7 thermique s'évaluant en début de procédé et servant à la détermination préalable d'un couple maximal de consigne X transmissible au moteur 7, l'estimation des pertes par frottement du moteur 7 thermique peut se faire en fonction d'au moins un des paramètres suivants pris unitairement ou en combinaison : une température du moteur, un type de moteur et un vieillissement du moteur.

En se référant plus particulièrement à la figure 1, qui montre une chaîne de traction 8 hybride pour une illustration non limitative d'un ensemble 8, l'invention concerne aussi un ensemble 8 d'un moteur 7 thermique, d'une unité de contrôle moteur associée à des moyens de mesure ou d'estimation d'une accélération du régime du moteur 7 thermique, d'une machine électrique 2 haute performance, c'est-à-dire fournissant une puissance d'au moins 30.000 Watt et un couple de 100 Newton-mètre, et d'un embrayage 3.

L'embrayage 3 permet le couplage entre la machine électrique 2 à haute performance et le moteur 7 thermique, la machine électrique 2 haute performance assurant le démarrage du moteur 7 thermique, ce qui peut ne pas être sa fonction primordiale.

L'unité de contrôle moteur présente des moyens de pilotage de l'embrayage 3 lors du démarrage du moteur 7 thermique. Selon l'invention, l'unité de contrôle moteur présente des moyens de détermination préalable pour l'embrayage 3 d'un couple maximal de consigne X transmissible au moteur 7, des moyens de comparaison entre cette accélération mesurée ou estimée et un gradient de régime moteur réellement obtenu et des moyens de correction du couple maximal de consigne X pour la mise en œuvre d'un procédé de pilotage tel que précédemment décrit.

Dans le mode de réalisation montrée à la figure 1, qui n'est pas limitatif, la machine électrique haute performance peut être une machine électrique 2 de traction liée mécaniquement à une boîte de vitesses 1 pour former une boîte de vitesses électrifiée 1, 2. Il est aussi possible d'employer une autre boîte de vitesses qu'une boîte de vitesses électrifiée 1, 2, comme par exemple une boîte de vitesses automatique classique, une boîte de vitesses robotisée, une boîte de vitesses manuelle pilotée ou non, étant entendu qu'une machine électrique 2 de haute performance est toujours utilisée pour le démarrage du moteur 7 thermique.

L'invention concerne enfin un véhicule automobile comprenant un tel ensemble 8 servant à la traction du véhicule automobile. Une application particulièrement avantageuse de l'invention se trouve pour un véhicule hybride avec un moteur 7 thermique et une machine électrique 2 de traction, cette machine électrique 2 de traction assurant aussi le démarrage du moteur 7 thermique. Ceci n'est cependant pas limitatif.

L'invention n'est nullement limitée aux modes de réalisation décrits et illustrés qui n'ont été donnés qu'à titre d'exemples.

## Revendications

1. Procédé de pilotage d'un embrayage (3) lors d'un démarrage d'un moteur (7) thermique, l'embrayage (3) accouplant une machine électrique (2) à haute performance, fournissant une puissance d'au moins 30.000 Watt et un couple de 100 Newton-mètre, au moteur (7) thermique lors d'une phase de démarrage du moteur (7) thermique, le procédé présentant une étape de mise en rotation de la machine électrique (2) avec l'embrayage (3) en position neutre pour ne transmettre aucun couple au moteur (7) puis une étape de fermeture de l'embrayage (3) entraînant une transmission de couple au moteur (7) thermique et donc sa mise en rotation, l'embrayage (3) étant piloté selon un couple maximal de consigne (X) transmissible au moteur (7), **caractérisé en ce que** le couple maximal de consigne (X) transmissible au moteur (7) est prédéterminé selon une estimation des pertes par frottement du moteur (7) thermique afin d'obtenir un gradient de régime moteur (7) donné et **en ce qu'**il est effectué une étape de mesure ou d'estimation d'une accélération du régime du moteur (7) lors de la transmission du couple de consigne durant la phase de démarrage et quand cette accélération mesurée ou estimée montre une différence de plus de 6,66 tours par seconde au carré avec le gradient de régime moteur (7) donné, il est effectué au moins une étape de correction du couple maximal de consigne (X) en un couple maximal de consigne corrigé (X+y%; X-z%) en fonction de l'accélération mesurée ou détectée afin que l'accélération réellement obtenue lors de la phase de démarrage tende vers le gradient de régime moteur (7) donné.

2. Procédé de pilotage selon la revendication 1, dans lequel, quand l'accélération mesurée ou estimée est inférieure au gradient de régime moteur (7) donné, le couple maximal de consigne (X) est considéré comme sous-évalué et est augmenté d'un pourcentage (y%) fonction de la différence entre l'accélération mesurée ou détectée et le gradient de régime moteur (7) donné pour donner le couple maximal de consigne corrigé (X+y%) et quand l'accélération mesurée ou estimée est supérieure au gradient de régime moteur (7) donné, le couple maximal de consigne (X) est considéré comme surévalué et est diminué d'un pourcentage (z%) fonction de la différence entre l'accélération mesurée ou détectée et le gradient de régime moteur (7) donné pour donner le couple maximal de consigne corrigé (X-z%).

3. Procédé de pilotage selon la revendication 1 ou 2, dans lequel il est défini un régime cible du moteur (7) thermique représentatif de son démarrage effectif, le couple maximal de consigne corrigé (X+y%; X-z%) étant appliqué jusqu'à atteinte du régime cible du moteur (7) thermique.

4. Procédé de pilotage selon l'une quelconque des revendications 1 à 3, dans lequel il est effectué une unique étape de correction du couple maximal de consigne (X) lors de la phase de démarrage, l'étape de mesure ou d'estimation de l'accélération du moteur (7) se faisant après une première durée (t1) prise à partir d'un début de démarrage commençant à la fermeture de l'embrayage (3), cette première durée (t1) étant inférieure à une durée totale estimée prise à partir de l'accouplement de l'embrayage (3) avec le moteur (7) thermique.

5. Procédé de pilotage selon la revendication précédente, dans lequel la première durée (t1) prise à partir d'un début de démarrage commençant à la fermeture de l'embrayage (3) est de 5 à 20 fois inférieure à la durée totale estimée prise à partir de l'accouplement de l'embrayage (3) avec le moteur (7) thermique.

6. Procédé de pilotage selon l'une quelconque des revendications 1 à 3, dans lequel il est effectué en temps réel plusieurs étapes successives de correction du couple maximal de consigne (X) lors de la phase de démarrage.

7. Procédé selon l'une quelconque des revendications précédentes, dans lequel l'estimation des pertes par frottement du moteur (7) thermique se fait en fonction d'au moins un des paramètres suivants pris unitairement ou en combinaison : une température du moteur (7), un type de moteur (7) et un vieillissement du moteur (7).

8. Ensemble (8) d'un moteur (7) thermique, d'une unité de contrôle moteur associée à des moyens de mesure ou d'estimation d'une accélération du régime du moteur (7) thermique, d'une machine électrique (2) haute performance, fournissant une puissance d'au moins 30.000 Watt et un couple de 100 Newton-mètre, et d'un embrayage (3) permettant le couplage entre la machine électrique (2) à haute performance et le moteur (7) thermique, la machine électrique (2) haute performance assurant le démarrage du moteur (7) thermique et l'unité de contrôle moteur présentant des moyens de pilotage de l'embrayage (3) lors du démarrage du moteur (7) thermique, **caractérisé en ce que** l'unité de contrôle moteur présente des moyens de détermination préalable pour l'embrayage (3) d'un couple maximal de consigne (X) transmissible au moteur (7), des moyens de comparaison entre cette accélération mesurée ou estimée et un gradient de régime moteur (7) réellement obtenu et des moyens de correction du couple maximal de consigne (X) pour la mise en œuvre d'un procédé de pilotage selon l'une quelconque des revendications précédentes.

9. Ensemble (8) selon la revendication précédente, dans lequel la machine électrique est une machine électrique (2) de traction liée mécaniquement à une boîte de vitesses (1) pour former une boîte de vitesses électrifiée (1, 2).

10. Véhicule automobile, **caractérisé en ce qu'**il comprend un ensemble (8) selon l'une quelconque des revendications 8 ou 9.

## Patentansprüche

1. Verfahren zum Steuern einer Kupplung (3) beim Starten eines Wärmemotors (7), wobei die Kupplung (3) eine elektrische Hochleistungsmaschine (2) koppelt und eine Leistung von mindestens 30.000 Watt liefert und ein paar 100 Newtonmeterzu dem thermischen Motor (7) während einer Startphase des thermischen Motors (7), wobei das Verfahren einen Schritt zum Drehen der elektrischen Maschine (2) mit der Kupplung (3) in der neutralen Position aufweist, um nicht zu übertragen Kein Drehmoment auf den Motor (7), dann ein Schritt des Schließens der Kupplung (3), wodurch das Drehmoment auf den Wärmemotor (7) und damit dessen Drehung übertragen wird, wobei die Kupplung (3) gemäß einem maximalen Drehmoment von gesteuert wird auf den Motor (7) übertragbarer Sollwert (X), **dadurch gekennzeichnet, dass** das auf den Motor (7) übertragbare maximale Solldrehmoment (X) nach einer Schätzung der Reibungsverluste des thermischen Motors (7) vorbestimmt ist, um einen Gradienten zu erhalten gegebene Motordrehzahl (7) und dadurch wird ein Schritt zum Messen oder Schätzen einer Beschleunigung der Motordrehzahl (7) durchgeführt während der Übertragung des Solldrehmoments während der Startphase und wenn diese gemessene oder geschätzte Beschleunigung eine Differenz von mehr als 6,66 Umdrehungen pro Sekunde im Quadrat mit dem gegebenen Motordrehzahlgradienten (7) zeigt, zumindest ein Schritt des Korrigierens des maximalen Solldrehmoments (X) in ein korrigiertes maximales Solldrehmoment (X + y%; Xz%) als Funktion der gemessenen oder erfassten Beschleunigung, so dass die Beschleunigung tatsächlich während der Startphase erhalten wird tendiert zum gegebenen Motordrehzahlgradienten (7).

2. Regelverfahren nach Anspruch 1, wobei, wenn die gemessene oder geschätzte Beschleunigung kleiner als der gegebene Motordrehzahlgradient (7) ist, das maximale Solldrehmoment (X) als unterschätzt angesehen und um eins erhöht wird. prozentuale (y%) Funktion der Differenz zwischen der gemessenen oder erfassten Beschleunigung und dem Motordrehzahlgradienten (7), die angegeben wird, um das maximal korrigierte Referenzdrehmoment (X + y%) zu erhalten, und wenn die gemessene oder geschätzte Beschleunigung größer ist Bei dem gegebenen Motordrehzahlgradienten (7) wird das maximale Solldrehmoment (X) als überschätzt angesehen und in Abhängigkeit von der Differenz zwischen der gemessenen oder erfassten Beschleunigung und dem Motordrehzahlgradienten um einen Prozentsatz (z%) verringert (7) angegeben, um das maximal korrigierte Referenzdrehmoment (Xz%) anzugeben.

3. Regelverfahren nach Anspruch 1 oder 2, bei dem eine für seinen effektiven Anlauf repräsentative Solldrehzahl des Wärmemotors (7) definiert ist, wobei das maximal korrigierte Referenzdrehmoment (X + y%; Xz%) bis angewendet wird Erreichen der Solldrehzahl des Wärmekraftmotors (7).

4. Regelverfahren nach einem der Ansprüche 1 bis 3, bei dem ein einzelner Schritt zum Korrigieren des maximalen Solldrehmoments (X) während der Startphase, dem Schritt des Messens oder Schätzens des I, durchgeführt wird. Die Beschleunigung des Motors (7) erfolgt nach einer ersten Dauer (t1) ab dem Start des Starts beim Schließen der Kupplung (3), wobei diese erste Dauer (t1) geringer als eine geschätzte Gesamtdauer ist aus der Kupplung (3) Kupplung mit dem Wärmemotor (7) entnommen.

5. Ein Steuerverfahren gemäß dem vorhergehenden Anspruch, bei dem die erste Dauer (t1), die von einem Start des Startstarts beim Schließen der Kupplung (3) genommen wird, 5- bis 20-mal kürzer ist als die geschätzte Gesamtdauer, die bei genommen wird von der Kupplung der Kupplung (3) mit dem Wärmemotor (7).

6. Regelverfahren nach einem der Ansprüche 1 bis 3, bei dem mehrere aufeinanderfolgende Schritte zum Korrigieren des maximalen Solldrehmoments (X) während der Startphase in Echtzeit ausgeführt werden.

7. Verfahren nach einem der vorhergehenden Ansprüche, bei dem die Schätzung der Reibungsverluste des thermischen Motors (7) in Abhängigkeit von mindestens einem der folgenden Parameter erfolgt, die einzeln oder in Kombination genommen werden : eine Temperatur des Motors (7) einen Motortyp (7) und Alterung des Motors (7).

8. Anordnung (8) eines thermischen Motors (7), eines Motorsteuergeräts, das mit Mitteln zum Messen oder Schätzen einer Beschleunigung der Drehzahl des thermischen Motors (7) einer elektrischen Maschine (2) verbunden ist) hohe Leistung, mit einer Leistung von mindestens 30.000 Watt und ein Drehmoment von 100 Bereitstellung Newton-Metern , und eine Kupplung (3), so dass die Kopplung zwischen der Hochleistungs - Elektromaschine (2) und der Wärmekraftmaschine (7) wobei die elektrische Hochleistungsmaschine (2) das Starten des thermischen Motors (7) sicherstellt und das Motorsteuergerät Mittel zum Steuern der Kupplung (3) beim Starten des thermischen Motors (7) aufweist, die **dadurch gekennzeichnet sind dass** das Motorsteuergerät über Mittel zur vorherigen Bestimmung der Kupplung (3) eines maximalen Solldrehmoments (X) verfügt, das auf den Motor (7) übertragbar ist, Mittel zum Vergleich zwischen dieser gemessenen oder geschätzten Beschleunigung und einem Gradienten tatsächlich erhaltene Motordrehzahl (7) und Mittel zum Korrigieren des maximalen Drehmoments von Anweisung (X) zur Implementierung eines Steuerverfahrens gemäß einem der vorhergehenden Ansprüche.

9. Anordnung (8) gemäß dem vorhergehenden Anspruch, bei der die elektrische Maschine eine elektrische Traktionsmaschine (2) ist, die mechanisch mit einem Getriebe (1) verbunden ist, um ein elektrifiziertes Getriebe (1, 2) zu bilden.

10. Kraftfahrzeug, **dadurch gekennzeichnet, dass** es eine Baugruppe (8) nach einem der Ansprüche 8 oder 9 umfasst.

## Claims

1. Method of controlling a clutch (3) when starting a thermal engine (7), the clutch (3) coupling a high performance electric machine (2), providing a power of at least 30,000 watts and a couple of 100 Newton-meters, to the thermal engine (7) during a starting phase of the thermal engine (7), the method having a step of rotating the electric machine (2) with the clutch (3) in neutral position so as not to transmit no torque to the engine (7) then a step of closing the clutch (3) causing torque to be transmitted to the thermal engine (7) and therefore its rotation, the clutch (3) being controlled according to a maximum torque of setpoint (X) transmissible to the engine (7), **characterized in that** the maximum setpoint torque (X) transmissible to the engine (7) is predetermined according to an estimate of the friction losses of the thermal engine (7) in order to obtain a gradient given engine speed (7) and **in that** a step of measuring or estimating an acceleration of the engine speed (7) is performed during the transmission of the target torque during the starting phase and when this measured or estimated acceleration shows a difference of more than 6.66 revolutions per second squared with the given engine speed gradient (7), at least a step of correcting the maximum setpoint torque (X) into a corrected maximum setpoint torque (X + y%; Xz%) as a function of the measured or detected acceleration so that the acceleration actually obtained during the starting phase tends towards the given engine speed gradient (7).

2. Control method according to claim 1, wherein, when the measured or estimated acceleration is less than the given engine speed gradient (7), the maximum setpoint torque (X) is considered to be underestimated and is increased by one. percentage (y%) function of the difference between the measured or detected acceleration and the engine speed gradient (7) given to give the maximum corrected reference torque (X + y%) and when the measured or estimated acceleration is greater at the given engine speed gradient (7), the maximum setpoint torque (X) is considered overestimated and is reduced by a percentage (z%) depending on the difference between the measured or detected acceleration and the engine speed gradient (7) given to give the maximum corrected reference torque (Xz%).

3. Control method according to claim 1 or 2, in which a target speed of the thermal engine (7) representative of its effective start-up is defined, the maximum corrected reference torque (X + y%; Xz%) being applied up to reaching the target speed of the thermal engine (7).

4. Control method according to any one of Claims 1 to 3, in which a single step of correcting the maximum setpoint torque (X) is performed during the starting phase, the step of measuring or estimating the I. 'acceleration of the engine (7) taking place after a first duration (t1) taken from the start of starting starting when the clutch (3) is closed, this first duration (t1) being less than an estimated total duration taken from the clutch (3) coupling with the thermal engine (7).

5. Control method according to the preceding claim, in which the first duration (t1) taken from a start of starting starting when the clutch (3) closes is 5 to 20 times less than the total estimated duration taken at from the coupling of the clutch (3) with the thermal engine (7).

6. Control method according to any one of Claims 1 to 3, in which several successive steps of correcting the maximum setpoint torque (X) are carried out in real time during the starting phase.

7. Method according to any one of the preceding claims, in which the estimation of the friction losses of the thermal engine (7) is made as a function of at least one of the following parameters taken individually or in combination : a temperature of the engine (7), a type of engine (7) and aging of the engine (7).

8. Assembly (8) of a thermal engine (7), of an engine control unit associated with means for measuring or estimating an acceleration of the speed of the thermal engine (7), of an electric machine (2) high performance, providing a power of at least 30,000 Watts and a torque of 100 Newton-meters , and a clutch (3) allowing the coupling between the high performance electric machine (2) and the thermal engine (7), the high performance electric machine (2) ensuring the starting of the thermal engine (7) and the engine control unit having means for controlling the clutch (3) when starting the thermal engine (7), **characterized in that** that the engine control unit has means of prior determination for the clutch (3) of a maximum setpoint torque (X) transmissible to the engine (7), means of comparison between this measured or estimated acceleration and a gradient engine speed (7) actually obtained and means for correcting the maximum torque of instruction (X) for the implementation of a control method according to any one of the preceding claims.

9. Assembly (8) according to the preceding claim, in which the electric machine is an electric traction machine (2) mechanically linked to a gearbox (1) to form an electrified gearbox (1, 2).

10. Motor vehicle, **characterized in that** it comprises an assembly (8) according to any one of claims 8 or 9.
